# EUROPEAN PATENT APPLICATION

(11) **EP 1 248 194 A1**
(43) Date of publication of application: **09.10.2002**
(21) Application number: 00915414.7
(22) Date of filing: 07.04.2000
(51) Int. Cl.: G06F 9/46, G06F 12/02, G06F 13/14

(54) **METHOD FOR FACILITATING DATA SHARING BETWEEN APPLICATION PROGRAMS AND ACCESSES TO PERIPHERAL APPARATUSES WITH APPLICATION PROGRAMS BY USING SHARED ADDRESSES**

(30) Priority: 17.05.1999 JP 13630199; 09.11.1999 WO PCT/JP99/06230
(71) Applicant: Technowave, Ltd., Tokyo, 160-0003 (JP)
(72) Inventor: YOSHIDA, Takashi, Matsudo-shi, Chiba 270-0033 (JP); KOMAZAWA, Yuuichi, Sapporo-shi, Hokkaido 007-0808 (JP)
(74) Representative: HOFFMANN - EITLE
(86) International application number: JP0002273
(87) International publication number: WO00070454

(57) **Abstract**

A computer-readable recording medium where there is recorded thereon a method for accessing a peripheral device and a software for executing the method just like in the case of reading or writing an ordinary address from an application program of computer.

This is accomplished by reserving a continuous memory space apart from the control of the operating system, assigning a common address name to each block of a specific width within said memory space, making it possible to select, for each block, at least either that it is used without any change as a memory area or that it is used to access a peripheral device, whereby, of the blocks, as for the block to be used as a memory area, placing the data serving as the memory contents in the block, or, as for the block to be used for accessing peripheral devices placing information about the peripheral devices to be accessed in the block.

## Description

### Field of Technology

It is related, in the field of computers, to a method and software for facilitating memory sharing by a plurality of application software operating on an operating system (OS) and access to peripheral devices by application software, and thereby to support the development of application software.

### Background Technology

The following problems have been encountered in the past when producing application software that operates on a computer OS (hereinafter referred to as an "application").

It has been that a method such as storing data in a file format had to be relied upon in order to share data among a plurality of independent applications, but this posed many problems in terms of both speed and ease of handling.

As for applications for controlling peripheral devices operating on the OS, changing a peripheral device required that the application itself be rewritten. Although it is theoretically possible, in anticipation of such a situation, to produce an application capable of flexibly accommodating such changes by providing greater versatility and achieving structuring, for example, this required an excessively complex structure and actually tended to pose more problems than it solved.

Also, writing an application for controlling a peripheral device used to require a different writing method for each peripheral device, thereby making it an extremely complex undertaking which caused increase of development Costs.

It is an object of the present invention to solve all of these problems at the same time and to provide an environment in which the software development is made easier and thereby reducing the number of development steps.

### Brief Description of the Invention

The present invention provides a method with which application developers can use a common address name to share a memory, a method with which peripheral devices can be easily accessed and an environment that supports the production of such applications.

The method of the present invention makes it possible for a developer to produce with the greatest of ease an application premised on memory sharing with other applications by using a common address name, as well as an application for accessing peripheral devices via said common address.

An application produced by using this method is executed in an environment where there can be used the common address name provided by the present invention. Specifically, the program for materializing this environment (hereinafter referred to as "control program") is executed prior to the execution of the application.

Of the present inventions, the invention according to Claim 1 is a method for facilitating the data sharing of application programs and access to peripheral devices by application programs, comprising the steps of reserving a continuous memory space apart from the control of the operating system assigning, a common address name to each block of a specific width within said memory space, making it possible to select, for the each block, at least either that the each block is used without any change as a memory area or that the each block is used to access a peripheral device, and of these blocks, as for the blocks to be used as memory areas, writing the data serving as the contents of the memory, while as for the blocks used for accessing peripheral devices, writing information of the peripheral devices to be accessed.

The phrase "a continuous memory space is reserved apart from the management of the operating system" means that the necessary means is implemented so that the reserved memory area will not be moved, interfered with, etc., by the operating system.

Thus reserving a specific memory area (hereinafter this reserved memory area will be referred to as a "shared area"), determining a corresponding common address for each block of a specific width within the shared area, and providing an environment that excludes this range from any interference by the OS makes it extremely easy to develop application software that shares memory.

Also, placing within a block information of a peripheral device allows the lock to be used for accessing the peripheral device.

Specifically, in the shared area, the block corresponding to each common address includes at least an area used as a memory for data sharing (hereinafter referred to as a "data holding block") and an area used for accessing a peripheral device (hereinafter referred to as an "I/O access block").

Regardless of the purpose for which these blocks are used, a user producing an application can access a common address just like in the case of reading/writing of an ordinary address.

As for an ordinary computer address, the size of a single address is set at 8 bits and the like, for instance. According to the method of the present invention, however, the size of a block assigned to a single common address can be set as desired, and thus not only can a large amount of data be held in a single address, but also the data attributes and other information at that address can also be held simultaneously at that address, making it possible to hold structured data.

Each developer can decide as desired which common address name is to be used, but the effects will be larger when some uniformly defined address is used in a common way.

The invention of Claim 2 is a method for facilitating the data sharing of application programs and access to peripheral devices by application programs, comprising reserving a continuous memory space apart from the management of the operating system assigning, a common address name to each block of a specific width within said memory space, making it possible to select, for each block, at least either that the each block is used without any change as a memory area, that the each block is used to access a peripheral device, or that an accesses to a common address within a second computer on a network, and of these blocks, as for the blocks to be used as memory areas, writing the data serving as the contents of the memory, as for the blocks to be used for accessing peripheral devices, writing information of the peripheral devices to be accessed, and the blocks used for access of a common address within a second computer on a network contain information for accessing the second computer.

In the shared area, as the block corresponding to each common address name, there are at least present a block used for accessing a common address in a second computer on a network (hereinafter referred to as a "network data holding block") in addition to the data holding block and the I/O access block.

This makes it possible to access the same common address in another computer linked to the network.

The invention in Claim 3 is the method according to Claim 1 or 2, characterized in that the information contained in the blocks used for accessing peripheral devices is the physical addresses of the corresponding peripheral devices.

Placing the physical addresses of peripheral devices in blocks makes it possible to use this physical address to access a peripheral device.

The invention in Claim 4 is the method according to Claim 2 or 3, characterized in that the information contained in the blocks used for accessing a common address within a second computer on a network is the network address of the second computer.

Placing in a block the network address of another computer on the network allows this address to be accessed so that the same common address on that computer can be accessed.

The invention in Claim 5 is the method according to any of Claims 1 to 4, characterized in that the number and name of the common address is a combination of alphabets and decimal numbers.

A computer address is usually expressed by binary, octal, hexadecimal, or other numbers. Expressing a common address name by a combination of alphabets and decimal numbers, such as X0001 to X9999, creates an environment that is easier for the user to understand.

The invention in Claim 6 is a support system for developing application programs, characterized in that there is provided an environment that makes possible the method according to any of Claims 1 to 5.

An environment that permits data sharing and peripheral device control using the common address name of the present invention provides a system with which the development of application programs for data sharing and peripheral device control is far easier than with a conventional method.

The invention in Claim 7 is a computer-readable recording medium with a program being recorded thereon for setting the common address environment, including a procedure for acquiring common address names; a procedure for reserving, apart from the control of the operating system, a memory area large enough to reserve a block of a specific width for each of said common addresses; a procedure for storing the attributes for the intended purpose of each block on the basis of a common address definition file; and a procedure for writing the initial data to each block if a block has such data.

The invention in Claim 8 is a computer-readable recording medium with a program being recorded thereon for setting the common address environment according to Claim 7, characterized in that the attributes for the intended purpose of each block include at least whether the block will be used as a memory area, or whether the block will be used for accessing a peripheral device, or whether the block will be used for accessing the common address of a second computer on a network.

The program recorded on this recording medium is a control program for setting up an environment in which a common address can be used. The application written by using the common address name is executed after this program has been executed so as to set up an environment in which a common address can be used.

The invention in Claim 9 is a computer-readable recording medium with a program being recorded thereon for setting the common address environment, including a procedure for using common address names to acquire the attributes for the corresponding blocks; and a procedure for accessing the data in a block as the contents of a memory when said attributes are of a type indicating that the block is used as a memory area, and for acquiring a physical memory address from a block and accessing a peripheral device when said attributes are of a type indicating use for accessing a peripheral device.

The invention in Claim 10 is a computer-readable recording medium with a program being recorded thereon for setting the common address environment, including a procedure for using common address names to acquire the attributes for the corresponding blocks; and a procedure for accessing the data in a block as the contents of a memory when said attributes are of a type indicating that the block is used as a memory area, for acquiring a physical memory address from a block and accessing a peripheral device when said attribute is of a type indicating that the block is used for accessing a peripheral device, or for acquiring the network address of a second computer from a block and accessing the address when said attribute is of a type to be used for accessing a common address within the second computer on the network.

A computer-readable recording medium with a program being recorded thereon for setting the common address environment, including a procedure for using common address names to acquire the attributes for the corresponding blocks; and a procedure for accessing the data in a block as the contents of a memory when said attributes are of a type indicating that the block is used as a memory area, or for acquiring a physical memory address from a block and accessing a peripheral device when said attributes are of a type indicating that the block is used for accessing a peripheral device.

The program recorded on this recording medium is for utilizing a common address environment in writing an application that is executed while an environment that allows the use of a common address has been set up by the control program according to Claim 88.

### Brief Description of the Drawings

Fig. 1 is a conceptual diagram illustrating an overview of a first example of the present invention;
Fig. 2 is a figure showing the contents of the common address definition file;

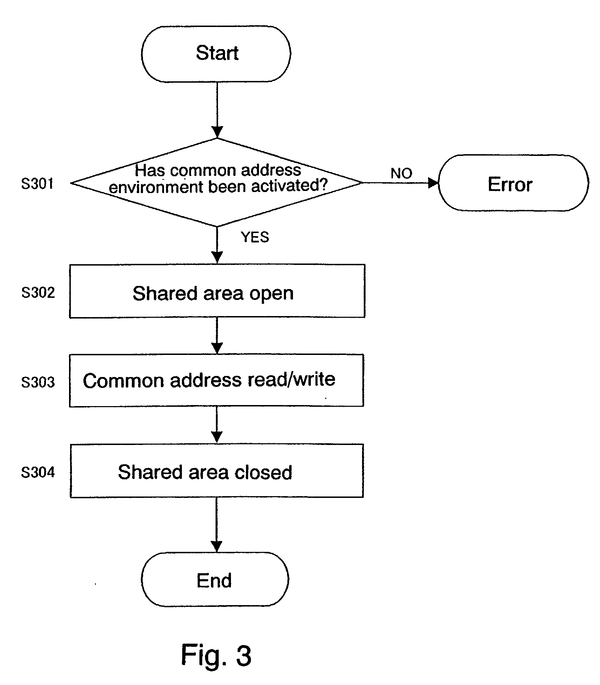

Fig. 3 is a flow chart illustrating the procedure in which an application accesses the I/O and memory using the common address environment;
Fig. 4 is a flow chart illustrating the procedure for materializing the common address environment;
Fig. 5 shows the data structure in the shared areas;
Fig. 6 shows of functions for accessing the common address from the application;
Fig. 7 is a flow chart illustrating the procedure of the function for accessing (reading) the common address from the application;
Fig. 8 is a flow chart illustrating the procedure of the function for accessing (writing) the common address from the application;
Fig. 9 is a flow chart illustrating the procedure for reserving a shared area;
Fig. 10 is a conceptual diagram illustrating an overview of the second example of the present invention;
Fig. 11 is a figure showing the contents of the common address definition file;
Fig. 12 is a flow chart illustrating the procedure for materializing a common address environment;
Fig. 13 is a flow chart illustrating the procedure of the function for accessing (reading) the common address from the application;
Fig. 14 is a diagram illustrating the outline of a procedure in which an application accesses (reads) a shared area using a common address;
Fig. 15 is a diagram illustrating the outline of a procedure in which an application accesses (reads) a peripheral device using a common address;
Fig. 16 is a diagram illustrating the outline of a procedure in which an application accesses (reads) a shared area on another computer via a network by using a common address; and
Fig. 17 is a diagram illustrating the outline of a procedure in which an application accesses (reads) a peripheral device connected to another computer via a network by using a common address.

### Preferred Embodiments of the Invention

An application developer first decides on the common address name to be used (such as deciding that X0000 to X9999 and Y0000 to Y9999 will be used) or uses a common address name that has already been decided upon by a third party, and thereafter develops an application which uses the access by the common address.

A control program is then executed to set up on a computer an environment in which the access by the common address can be materialized, after which the fore going application is executed.

### Example 1

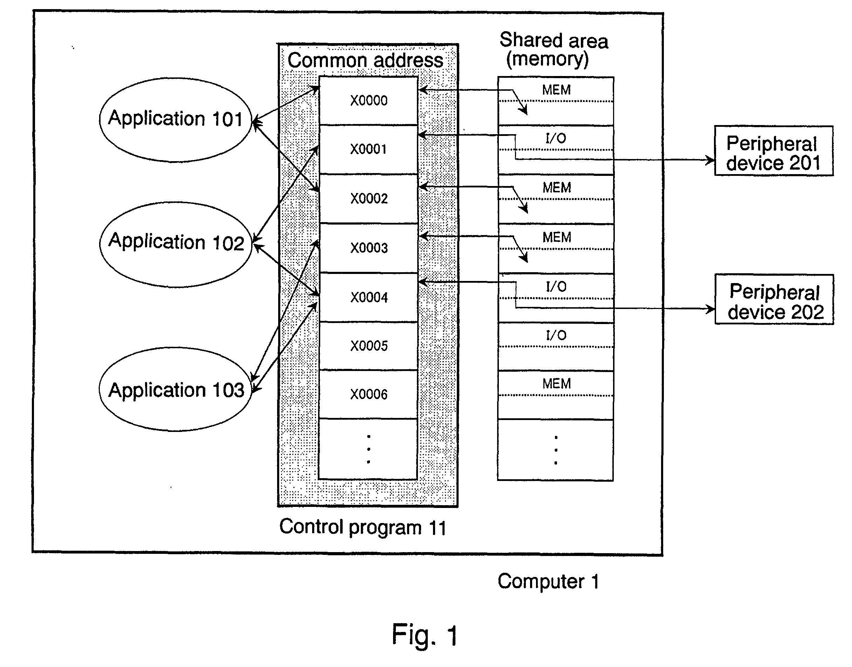

Fig. 1 is a conceptual diagram of a method materialized by the present invention for memory sharing and for accessing a peripheral device via a common address.

The user is free to decide what to the number and name of the common address. The user then decides for each common address name whether the corresponding block will be used as a data holding block or as an I/O access block, and produces a definition file containing such information.

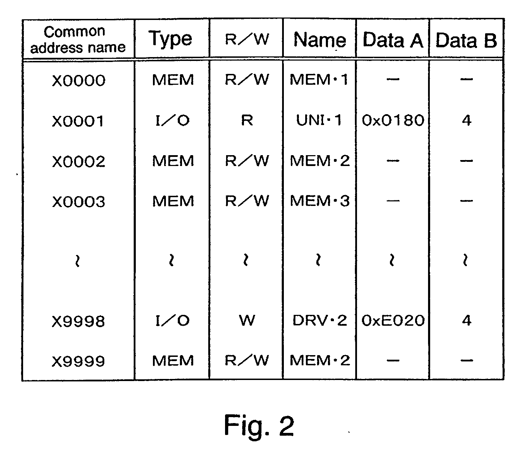

The user writes data as shown in Fig. 2 to this definition file. Fig. 2 is an example of data in the common address portion of an X sequence. In Fig. 2, the common address name is written in the "Common address" column, and how this common address is used, that is, whether it is used as a shared memory for data sharing (MEM) or used for accessing a peripheral device (I/O), is written in the "Type" column. In the "R/W" column, there is written whether the I/O or memory will be used for reading or writing (or both). The name of a peripheral device or memory is written arbitrarily by the user in the "Title" column.

In the case of a common address indicating an I/O accel block, the physical address of a peripheral device to be mapped is written in the "Data A" column, and a numerical value indicating the number of bytes is written in the "Data B" column. In the case of a common address indicating a data holding block, there is no need for description of "Data A" or "Data B" because the shared area is used directly as an area for holding data, but some initial value may be written therein.

There are some cases here in which "offset" based on an actual address is written apart from this actual address.

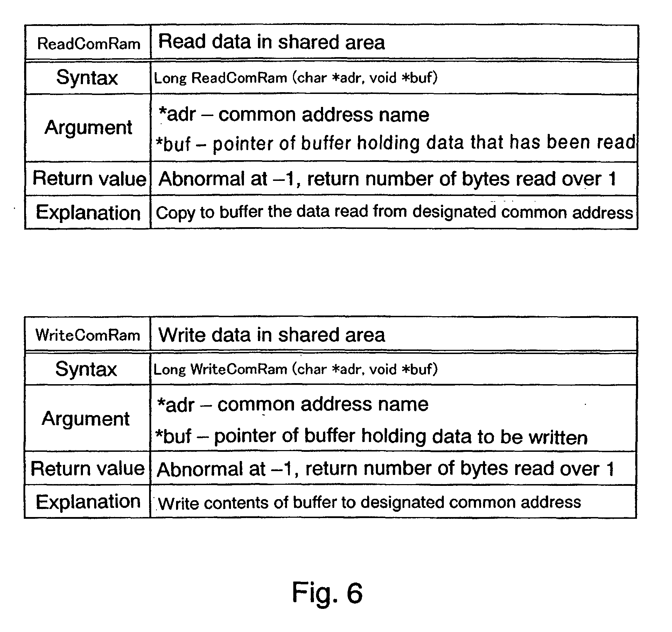

After deciding on the common address, the user develops an application using
ReadComRam (char *dat, void *buf)
WriteComRam (char *dat, void *buf)
or the like, which is the C language function (program) as shown in Fig. 6 provided for supporting the development by user in order to utilize these common addresses.

The method for obtaining these functions themselves will be discussed below, and the method for written an application using these functions will be discussed next.

S301: Confirm whether the control program has provided a common address environment. Return an error if a common address environment has not been provided.

S302: Open the shared area (which is the paging file discussed below) in order to make it accessible.

S303: Access the peripheral device indicated by the physical address written in the data in the shared area or in the shared area by reading/writing the block in the shared area using the common address. Whether shared data is accessed or a peripheral device is accessed, the application reads as follows, requiring only reading / writing the common address; the common address is read/written.
ReadComRam (char *dat, void *buf)
WriteComRam (char *dat, void *buf)
S304: Close the shared area once the access is complete.

The user then activates the control program and executes the application utilizing the common address produced above.

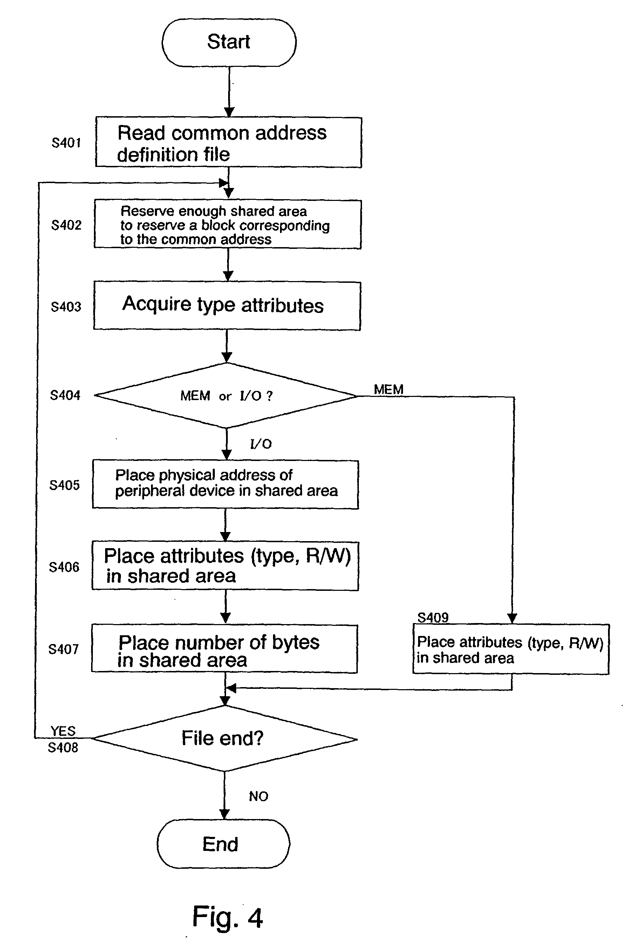

The operation of the control program will now be described. Fig. 4 is a flow chart of this operation.

When the program starts, first, in S401, an attempt is made to read the file that defines the number and name of the common address. If there is a file produced by the user here, it is read, but if there is no file, the default definition file is used.

The default address name is defined, for example, as being from X0001 to X9999 for input use, from Y0001 to Y9999 for output use, from M0001 to M9999 for memory use, from D0001 to D9999 for data use, and from R0001 to R9999 for real number use. A distinction is made for the sake of convenience between input-use, output-use, and so forth, but this is just for giving names so as to facilitate use by the user, and the names do not necessarily moan that the function content is different.

Let us assume a case in which there are used the address names of the above-mentioned X0001 to X9999.

Enough shared area to reserve a block corresponding to the common address is then reserved in the memory (S402).

The shared area is reserved apart from the control of the OS so that it, will not be moved by the OS. The procedure for carrying this out will be described using an example of using Windows NT as the OS.

On Windows NT, a physical memory is accessed via a paging file. Therefore, this paging file is locked in as the shared area.

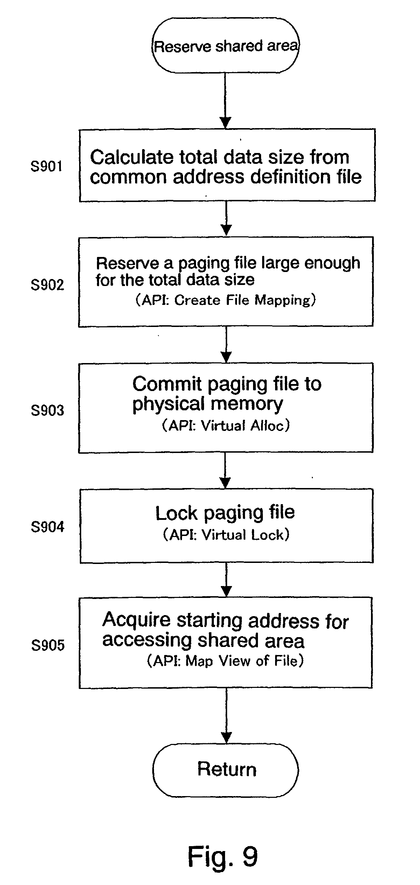

Fig. 9 is a flow chart of the specific procedure.

First, the total data size is calculated from the common address definition file (S901).

Then, a paging file large enough to hold the total data size is named and reserved (S902).

Next, the paging file is committed to a physical memory (S903).

After this, the paging file is locked (S904).

A start address (the start address of the shared area) for accessing the paging file (S905) is then acquired.

The above procedure constitutes having reserved a locked shared area.

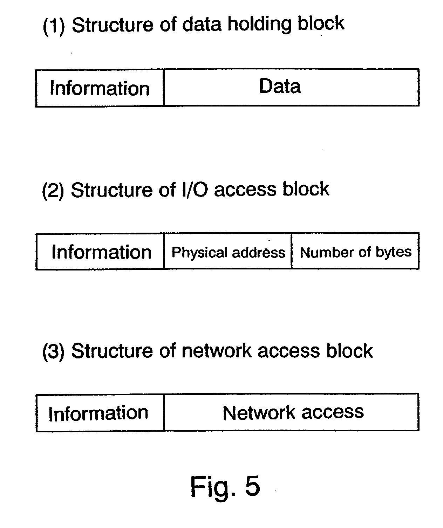

Returning back to the description of Fig. 4, the definition file (Fig. 2) is then sequentially scanned. Specifically, as shown in steps S403 to S409 of the flow chart, the attributes (type, R/W) and data written in the definition file are sequentially read out, and the necessary data are written in the corresponding block of the shared area. The data structure of one block of the shared area is as shown in Fig. 5.

First, the "type" of each block designated by the common address name is sequentially read (S403), this type is evaluated (S404), and if the type attribute of the block is an I/O access block, the physical address of the I/O read from the "Data A" column of the definition file is placed in the "physical address" column (Fig. 5) of that block (S405). Next, the attribute information, such as "type" and "R/W", and other such attribute information is written in the "information" column (Fig. 5) of the block (S406).

The number of bytes used to access the I/O, which was read from the "Data B" column of the definition file, is written in the "number of bytes" column (Fig. 5) (S407).

If the type of block is a "data holding block," the attributes are written in the "attributes" column (S409). The data in the "data" column (Fig. 5) of that block is shared by each application, but at the point of time when the control program is activated, there is no particular need to place data in this column. Naturally, some initial value may be placed therein.

The above procedure is repeated to the end of the definition file (S408), and the definition file is closed after it has all been read.

A common address environment is set by executing the above.

The operation during the execution of the
ReadComRam (char *dat, void *buf)
WriteComRam (char *dat, void *buf)
shown in Fig. 6 will now be described.

The application calls these functions, and the control program executes them.

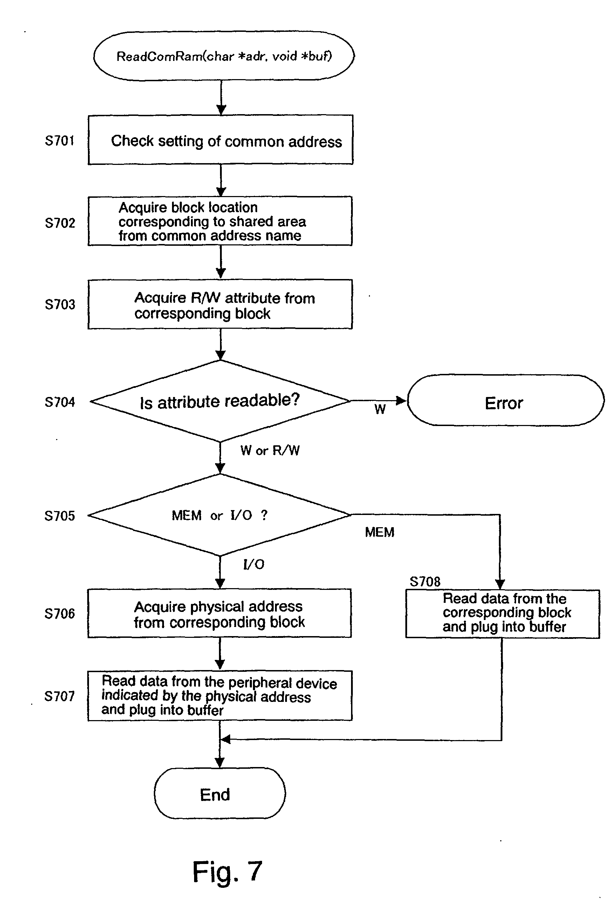

First, the procedure for executing the function ReadComRam(char *dat, void *buf) will be described using Fig. 7.

First, confirm that an environment has been set up in which this function can be used (S701).

Next, a corresponding block location within the shared area is acquired from the common address name (*adr) to be read, which is given by a first argument (S702). Since the start address of the shared area is stored at the point of time when the control program reserves the shared area, this can be calculated on the basis thereof.

For instance, if the common address starts from X0000, and if the leading address of the actual address of the shared area reserved continuously in memory is D0000, and if the width of one block of the common address is 32 bytes, then the actual address of the shared area corresponding to the common address X0002 is at the address 2 × 32 bytes greater than the D0000 address.

The "R/W" attribute is then acquired from the "information" column of the shared area (S703).

It is further confirmed from this attribute that the common address to be read is one for which reading is permitted (that it is "R" or "R/W") (S704).

Next, from the above-mentioned "type" attribute, it is checked to see if the block indicated by the common address to be read is a "data holding block" or an "I/O access block" (S705).

If it is an I/O access block, the physical address contained in the "physical address" column of that block of the shared area is acquired (S706), and the data are acquired from the peripheral device indicated by that physical address, followed by the value thereof being stored in a variable buffer (S707).

If it is a data holding block, the data stored in the "data" column of that block of the shared area are acquired as the value stored at that common address, and are stored in a variable buffer (S708).

The above is the procedure for executing the function
ReadComRam(char *dat, void *buf).

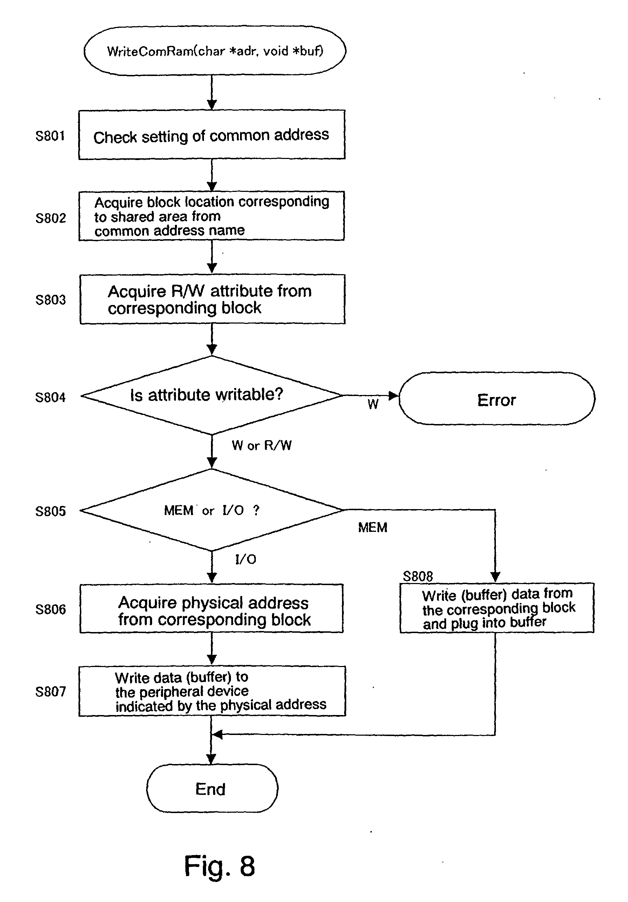

Next, the procedure for executing the function WriteComRam (char *dat, void *buf) will be described using Fig. 8.

First, confirm that an environment has been set up in which this function can be used (S801).

Next, a corresponding block location within the shared area is acquired from the common address name (*adr) to be read, which is given by a first argument (S802). This can be calculated in the same manner as for ReadComRam( ).

Next, the "R/W" attribute is acquired from the "information" column of the shared area (S803).

It is further confirmed from this attribute that the common address to be read is one for which writing is permitted (that it is "W" or "R/W") (S804).

Next, from the above-mentioned "type" attribute, it is checked to see if the block indicated by the common address to be read is a "data holding block" or an "I/O access block" (S805).

If it is an I/O access block, the physical address contained in the "physical address" column of that block of the shared area is acquired (S806), and the data in the buffer is written to the peripheral device indicated by that physical address (S807).

If it is a data holding block, the data in the buffer is stored in the "data" column of that block of the shared area (S808).

The above is the procedure for executing the function WriteComRam(char *dat, void *buf).

The concept for the execution of ReadComRam( ) and WriteComRam( ) by the control program will be described once again, including the relationship to the application that controls this execution.

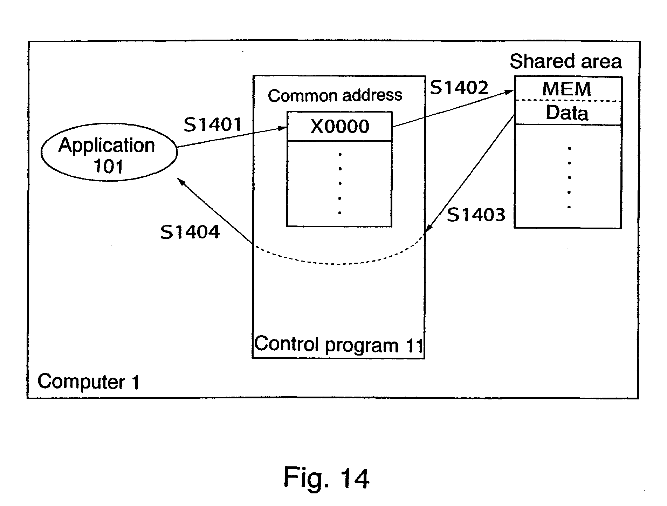

First, as an example of accessing data shared within a shared area, a case of reading the data in the shared area by means of ReadComRam() will be described with reference to Figs. 14 and 7. Here, just as in Fig. 1, the shared area indicated by the common address X0000 is assumed to be used for data sharing.

When the application calls ReadComRam( X0000, buf), the control program executes the module of ReadComRam() (S1401 in Fig. 14).

Then, the corresponding block location in the shared area is obtained from the common address name, and the attributes and the like of the common address are checked (S1402 in Fig. 14, S702-S705 in Fig. 7).

Because the attribute is "MEM", the control program reads the data in the shared area (S1403 in Fig. 14) and returns the data to the application as the result of executing ReadComRam() (S1404 in Fig. 14, S708 in Fig. 7).

The application can read the shared data in the shared area by using the common address as above.

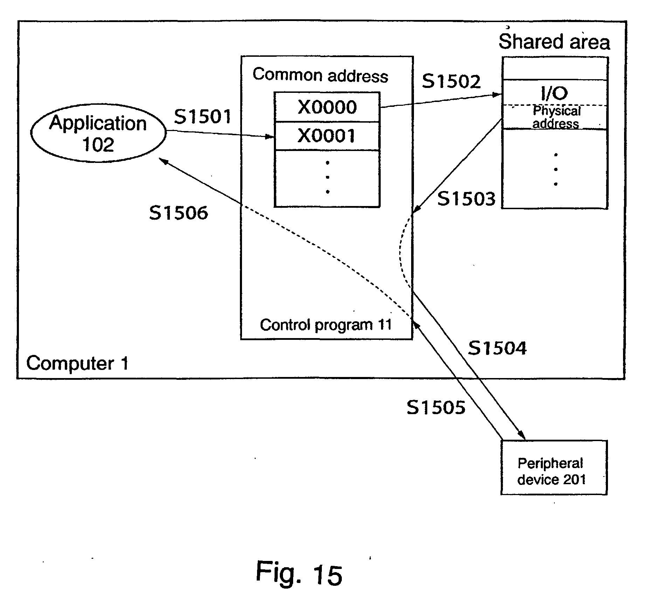

Next, as an example of using to access a peripheral device, a case of acquiring data from a peripheral device will be described with reference to Figs. 15 and 7. Here, just as in Fig. 1, the shared area indicated by the common address X0000 is assumed to be used for accessing a peripheral device.

When the application calls ReadComRam( X0001, buf), the control program executes ReadComRam( ) (S1501).

First, the corresponding block of the shared area is acquired from the common address name, and the attribute of the designated common address is checked (S1502 in Fig. 15, S702-S705 in Fig. 7).

Since this attribute is "I/O," the control program reads the data in the shared area (S1503 in Fig. 15). This is the physical address of the peripheral device to be accessed.

This physical address is then used to execute a read access for the peripheral device (S1504-S1505 in Fig. 15, S707 in Fig. 7).

The data that is read is then returned to the application as the result of executing ReadComRam( ) (S1506 in Fig. 15).

Thus, the application only reads the common address, and thereby making it possible that the read access for the peripheral device can be accomplished.

An example of ReadComRam( ) was given above, and the basic operation is the same for WriteComRam( ), with the only difference being between writing and reading.

### Example 2

We will next describe an example in which a control program is executed on both a first computer and a second computer, and an application program is executed in each of these, and whereby the data sharing or the control of a peripheral device is carried out in these application programs.

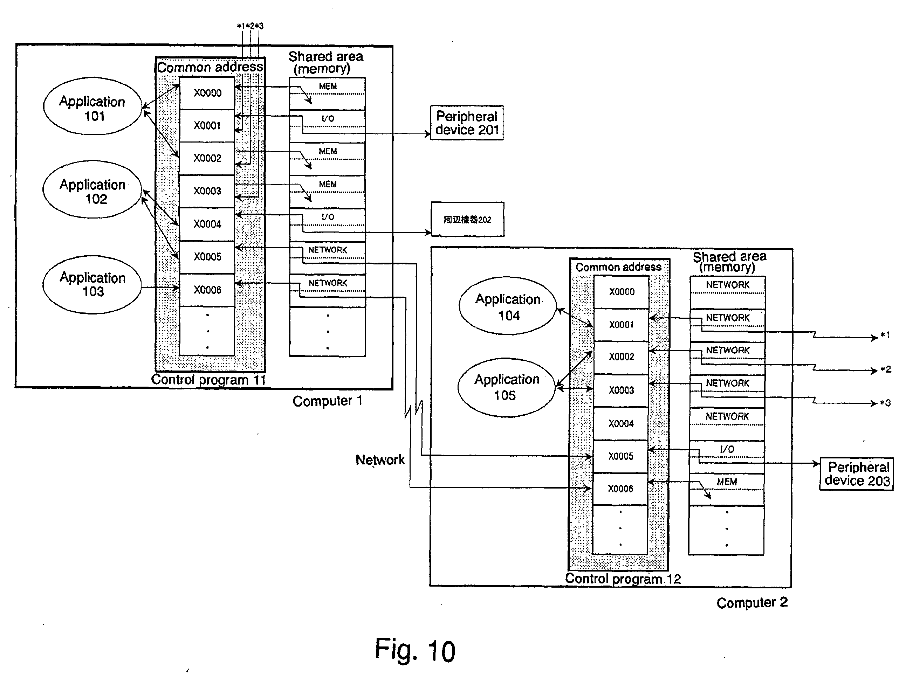

Fig. 10 is a diagram of the concept here.

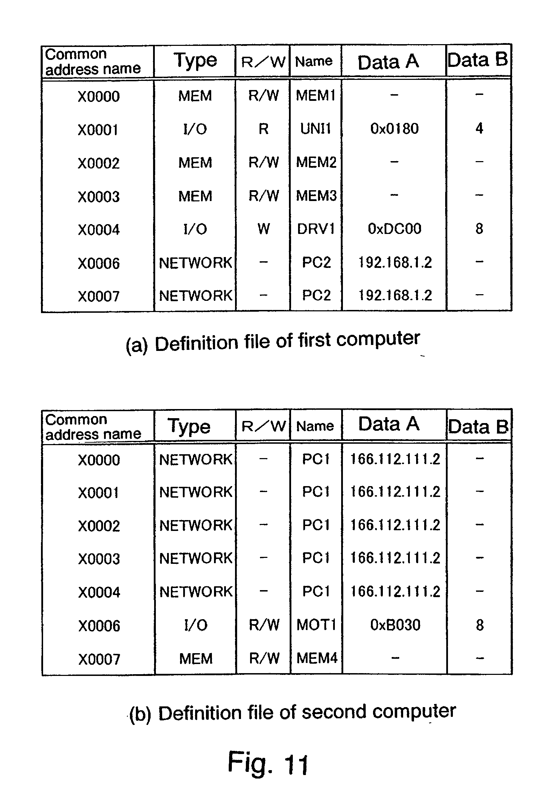

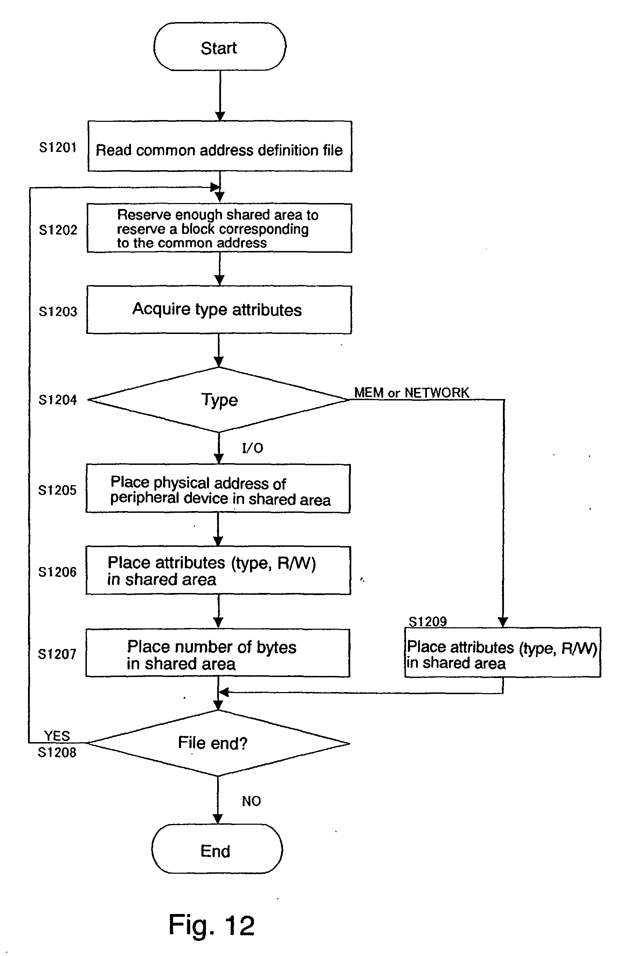

A control program (Fig. 12) is executed with the definition file in Fig. 11 (a) in the first computer (computer 1), and a control program (Fig. 12) is executed with the definition file in Fig. 11 (b) in the second computer (computer 2).

As for the attribute of the shared area, there is a network data holding block in addition to being a data holding block or an I/O access block (Fig. 5 (3)).

The concept of execution of ReadComRam( ) and WriteComRam( ) in this case by the control program will be described, including the relationship to the application that calls this.

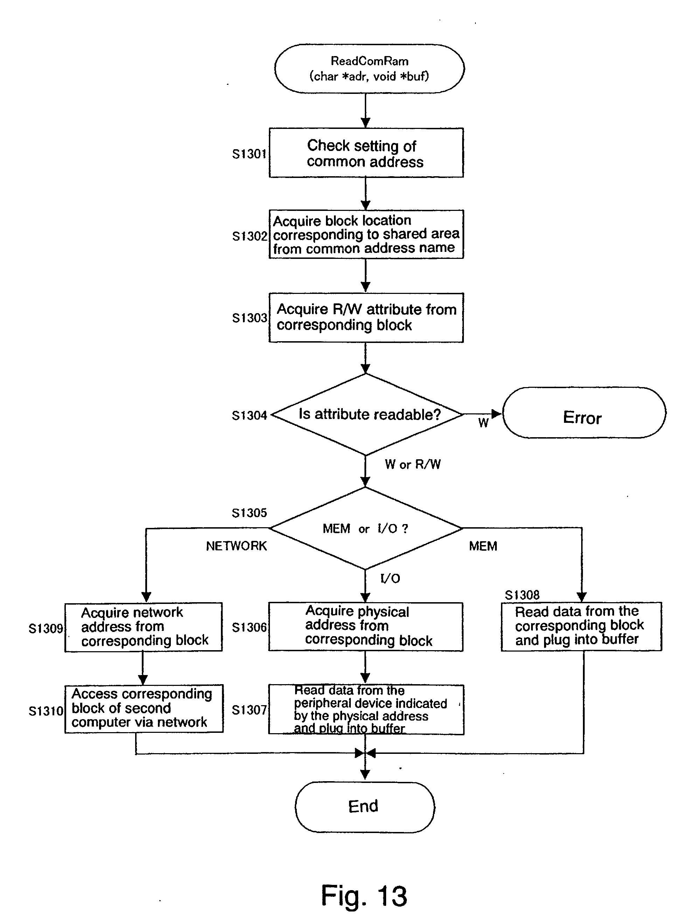

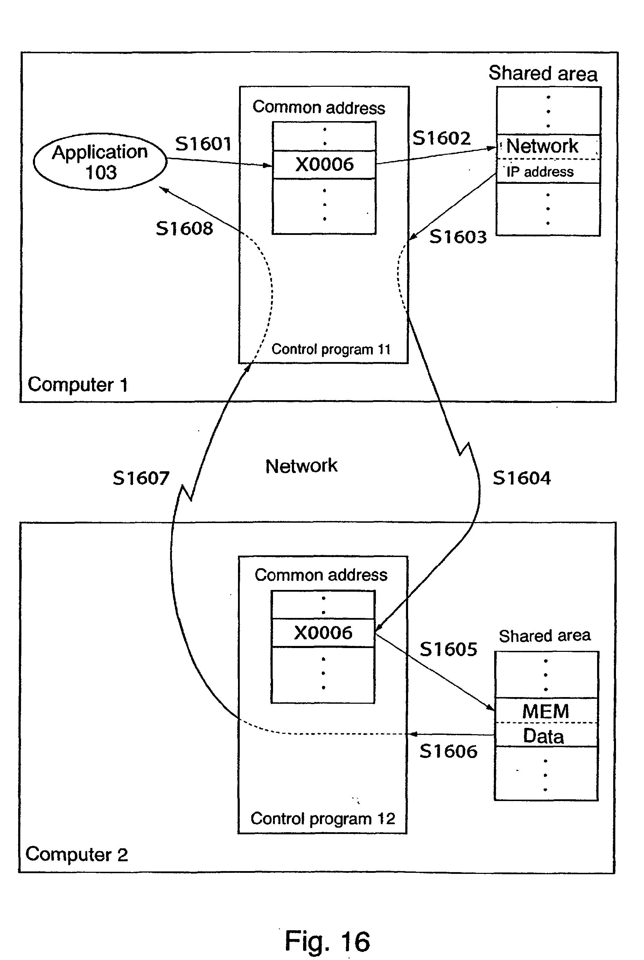

First, as an example of a case where the application in computer 1 accesses the data shared within a shared area in computer 2, we will describe, with reference to Figs. 16 and 13, a case in which an application 103 on computer 1 in Fig. 10 reads the common address X0006 by ReadComRam( ), thereby reading the shared data in the shared area (X0006) of computer 2.

When the application 103 calls ReadComRam( X0006, but), the control program 11 executes the module of ReadComRam() (S1601 in Fig. 16).

The corresponding block location of the shared area is acquired from this common address name, and the attribute of the common address is checked (S1602 in Fig. 16, S1302-S1305 in Fig. 13).

Since this attribute is "NETWORK," the control program 11 reads the data in the shared area (S1603 in Fig. 16). This is the IP address of the computer 2 (S1309 in Fig. 13).

The control program 11 thereupon uses this IP address to instruct the control program 12 on the computer 2 to execute ReadComRam( X0006, buf) (S1604 in Fig. 16 and S1310 in Fig. 13).

As the result, the control program 12 executes ReadComRam( X0006, buf). The subsequent operation of the control program 12 in the computer 2 is the same as when the data in the shared area is read as shared data as described in Example 1.

Specifically, the corresponding block location of the shared area is acquired from the common address name, and the common address attribute, etc., is checked (S1605 in Fig. 16). This is the procedure of S1302 to S1305 in Fig. 13, although of course the operation this time is in the control program 12.

Since this attribute is "MEM," the control program 12 reads the data in the shared area (S1606 in Fig. 16, S1308 in Fig. 13), and returns this data as the execution result of ReadComRam() to the control program 11 of the computer 1 (S1607 in Fig. 16).

The control program 11 returns the value returned from the control program 12, without any change, to the application 103 (S1608 in Fig. 16).

Thus, the application 103 on the computer 1 is able to read shared data in the shared area of the computer 2 by using the common address.

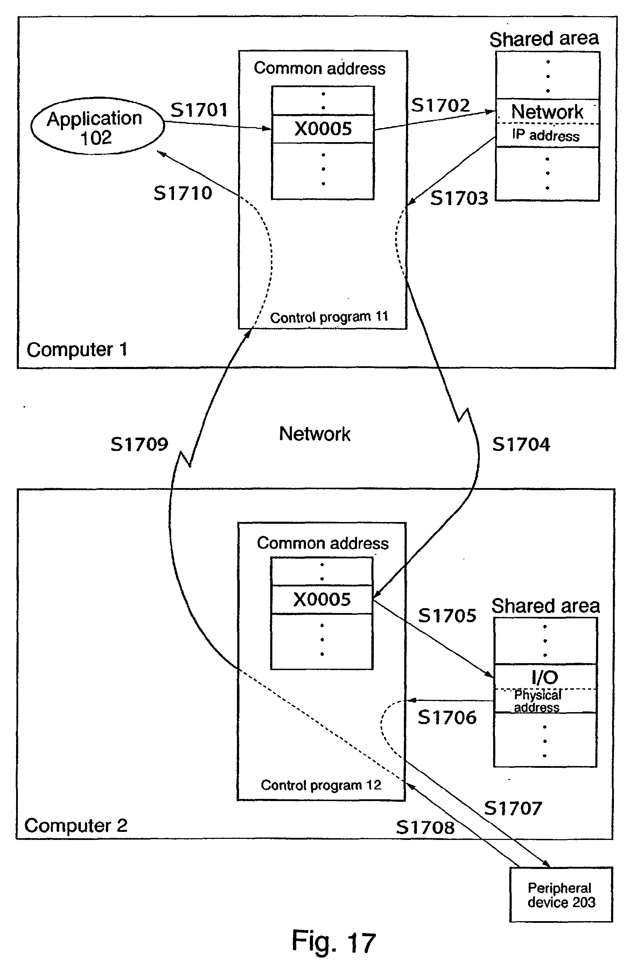

Next, as an example of a case in which an application on the computer 1 uses a common address to access a peripheral device connected to the computer 2, a case in which the application 102 on the computer 1 effectuates read access from a peripheral device 203 connected to the computer 2 by reading the common address X0005 by means of ReadComRam() will be described with reference to Figs. 17 and 13.

When ReadComRam( X0005, buf) is called by the application 102, the control program 11 executes the module of ReadComRam() (S1701 in Fig. 17).

The corresponding block location of the shared area is then acquired from the common address name, and the common address attribute, etc., is checked (S1702 in Fig. 17, S1302-S1305 in Pig. 13).

Since this attribute is "NETWORK," the control program 11 reads the data in the shared area (S1703 in Fig. 17). This is the IP address of the computer 2 (S1309 in Fig. 13).

The control program 11 thereupon uses this IP address to instruct the control program 12 on the computer 2 to execute ReadComRam( X0005, buf) (S1704 in Fig. 17, S1310 in Fig. 13).

As the result, the control program 12 executes ReadComRam( X0005, buf). The subsequent operation of the control program 12 in the computer 2 is the same as when accessing a peripheral device as described in Example 1.

Specifically, the corresponding block location of the shared area is acquired from the common address name, and the common address attribute, etc., is checked (S1705 in Fig. 17). This is the procedure of S1302 to S1305 in Fig. 13, although of course the operation this time is in the control program 12.

Since this attribute is "I/O," the control program 12 reads the data in the shared area X0005 (S1706 in Fig. 17). This is the physical address of the peripheral device to be accessed (S1306 in Fig. 13).

Next, this physical address is used to execute the read access of the peripheral device (S1707 and S1708 in Fig, 17, S1307 in Fig. 13).

The data that has been read is then returned as the execution result of ReadComRam( ) to the control program 11 of the computer 1 (S1709 in Fig. 17).

The control program 11 returns the value returned from the control program 12 to the application 102 (S1710 in Fig. 17) without any change.

Thus, the application 102 on the computer 1 is able to effectuate the read access to a peripheral device of computer 2 merely by reading the common address.

The preceding descriptions were for a case in which there were two computers, but the same applies when there are three or more computers.

The above-mentioned control programs, programs for functions used for the access to a common address and so forth can also be provided as a package for increasing the efficiency of developing application programs for data sharing or accessing peripheral devices, or as a system along with a computer device.

### Industrial Applicability

The present invention has the effect of improving the efficiency of application development.

An application producer can access a peripheral device in an image similar to the reading/writing of data by an address. This affords a marked improvement in the efficiency of application development.

It is also made easy for a plurality of applications to share data.

Since access from a plurality of applications can be unified here, there is provided an advantage that collision among a plurality of accesses can be prevented.

Also, there is no need for the user to rewrite an application when a peripheral device (external hardware) is changed.

Furthermore, by putting the data into a data holding block at the time of the access to a peripheral device, another application can monitor the status of that peripheral device without directly accessing the I/O.

## Claims

1. A method for facilitating the data sharing of application programs and access to peripheral devices by application programs, comprising;
reserving a continuous memory space apart from the control of the operating system,
assigning a common address name to each block of a specific width within said memory space,
making it possible to select, for the each block, at least either that the each block is used without any change as a memory area or that the each block is used to access a peripheral device, and
of these blocks, as for the blocks to be used as memory areas, writing the data serving as the contents of the memory, while as for the blocks used for accessing peripheral devices, writing information of the peripheral devices to be accessed.

2. A method for facilitating the data sharing of application programs and access to peripheral devices by application programs, comprising;
reserving a continuous memory space apart from the control of the operating system,
assigning a common address name to each block of a specific width within said memory space,
making it possible to select, for the each block, at least either that the each block is used without any change as a memory area, that the each block is used to access a peripheral device, or that an access to a common address within a second computer on a network, and
of these blocks, as for the blocks to be used as memory areas, writing the data serving as contents of the memory, as for the blocks to be used for accessing peripheral devices, writing information of the peripheral devices to be accessed, and those blocks used for access to a common address within a second computer on a network, writing information for accessing the second computer.

3. The method according to Claim 1 or 2, **characterized in that** the information to be written in the blocks used for accessing peripheral devices is the physical address of the peripheral devices.

4. The method according to Claim 2 or 3, **characterized in that** the information to be written in the blocks used for accessing a common address within a second computer on a network is the network address of the second computer.

5. The method according to any of Claims 1 through 4, **characterized in that** the name of the common address comprises a combination of alphabets and decimal numbers.

6. An application program development support system, **characterized in that** there is provided an environment that makes possible the method according to any of Claims 1 through 5.

7. A computer-readable recording medium with a program being recorded thereon for setting the common address environment, the program comprising;
a procedure for acquiring common address names;
a procedure for reserving, apart from the control of the operating system, a memory area large enough to reserve a block of a specific width for each of said common addresses;
a procedure for storing the attribute of the intended purpose for each block based on the common address definition file; and
a procedure for writing the initial data to each block if the block has such data.

8. A computer-readable recording medium with a program being recorded thereon for setting the common address environment according to Claim 7, **characterized in that** the attribute of the intended purpose for the each block includes at least either of whether it is used as a memory area, whether it is used for accessing a peripheral device, or whether it is used for accessing the common address within a second computer on a network.

9. A computer-readable recording medium with a program being recorded thereon for setting the common address environment, the program comprising;
a procedure for using common address names to acquire the attribute for the corresponding block; and
a procedure for accessing the data in a block as the contents of a memory when said attribute is of a type indicating that the block is used as a memory area, or for acquiring a physical memory address from the block and accessing a peripheral device when said attribute is of a type indicating that the block is used for accessing a peripheral device.

10. A computer-readable recording medium with a program being recorded thereon for setting the common address environment, the program comprising;
a procedure for using common address names to acquire the attribute for the corresponding block; and
a procedure for accessing the data in a block as the contents of a memory when said attribute is of a type indicating that the block is used as a memory area, for acquiring a physical memory address from the block and accessing a peripheral device when said attribute is of a type indicating that the block is used for accessing a peripheral device, or for acquiring the network address of a second computer from the block and accessing the address when said attribute is of a type to be used for accessing a common address within the second computer on the network.
